Europäisches Patentamt

(19) European Patent Office

Office européen des brevets

(11) Publication number: **0 013 455**
**B1**

(12) EUROPEAN PATENT SPECIFICATION

(45) Date of publication of patent specification: **21.09.83**

(21) Application number: **79200794.0**

(22) Date of filing: **20.12.79**

(51) Int. Cl.³: **F 16 L 39/04**

(54) A rotatable swivel for one or more conduits

(30) Priority: **22.12.78 NL 7812499**

(43) Date of publication of application:
**23.07.80 Bulletin 80/15**

(45) Publication of the grant of the patent:
**21.09.83 Bulletin 83/38**

(84) Designated Contracting States:
**BE FR GB IT NL**

(56) References cited:
**FR - A - 2 298 757**
**FR - A - 2 348 428**
**FR - A - 2 422 097**
**NL - A - 7 310 795**
**US - A - 3 698 433**
**US - A - 4 052 090**
**US - A - 4 126 336**

(73) Proprietor: **SINGLE BUOY MOORINGS INC.**
**P.O. Box 844**
**CH-1701 Fribourg (CH)**

(72) Inventor: **Foolen, Johannes A.**
**34, Avenue de Provence**
**Eze-sur-Mer (FR)**

(74) Representative: **van der Beek, George Frans et al,**
**Nederlandsch Octrooibureau Johan de Wittlaan**
**15 P.O. Box 29720**
**NL-2502 LS Den Haag (NL)**

# A rotatable swivel for one or more conduits.

The invention relates to a rotatable swivel for a plurality of conduits comprising a plurality of annular chambers each of which formed by a stationary, radially inner wall portion and a radially outer wall portion rotatably mounted with respect thereto, said rotatable wall portion being supported on said stationary wall portion by radially and axially operative bearing means, said wall portions being sealed with respect to each other by means of annular sealing rings, each wall portion having one or more inlet connections or outlet connections to said plurality of conduits, said inner wall portions surrounding a central aperture through which the conduits connected to the inner wall portions run.

Such a rotatable swivel is known from e.g. NL—A—73,10795 and US—A—3,698,433. Said known swivels have the disadvantage that repair work, e.g. the replacement of seals, or bearings, is extraordinary complicated. For repair the swivels have to be taken apart entirely and reassembled which work only can be done in a work shop. This means that the swivel has to be removed from a buoy, placed on board of a ship to perform said repair operations.

A plurality of conduits are usually connected to the swivel many of which contain oil or other substances which could spoil the environment. With the known swivels this, however, hardly can be avoided since all connections have to be disconnected.

The purpose of the invention is to provide a rotatable swivel with which said problems are substantially solved.

According to the invention this has been achieved in that the stationary inner wall portions of all chambers are identical in form, cross section and diameter, that the rotatable outer wall portions of all chambers are identical in shape, cross section and diameter, that the outer wall portions and/or inner wall portions are detachably interconnected and that a single axial-radial bearing is placed between two adjacent chambers with the inner race-ring being connected to at least one of the stationary inner wall portions and the outer race-ring being connected to at least one of the rotatable outer wall portions of the adjacent chambers.

Due to the location of the bearings between the chambers and the disconnectable connection of said chambers repair operations can be performed by lateral displacement of the bearings or chamber to be replaced after having performed the necessary disconnections and axial separation of the adjacent chambers. As all elements of the chambers are identical one not only obtains a more simple construction but repair operations can now be done on the mooring buoy itself. Repair now is a simple operation by exchange of a bearing and/or chamber to be repaired by a new one whilst disconnections of conduits or hoses to those chambers which remain intact has become superfluous.

The interconnection between the inner wall portions can be obtained according to the invention by coupling the stationary inner wall portions to each other in the circumferential direction by means of cams. Preferably this is done in that at the level of each bearing and inside said bearing a ring is placed between two adjacent chambers, said ring having recesses for the cams.

Said coupling in circumferential direction provides for automatic disengagement as soon as two adjacent chambers are shifted apart. This facilitates repair operations.

The invention will now be elucidated in further detail with reference to the annexed drawings showing one embodiment of the invention.

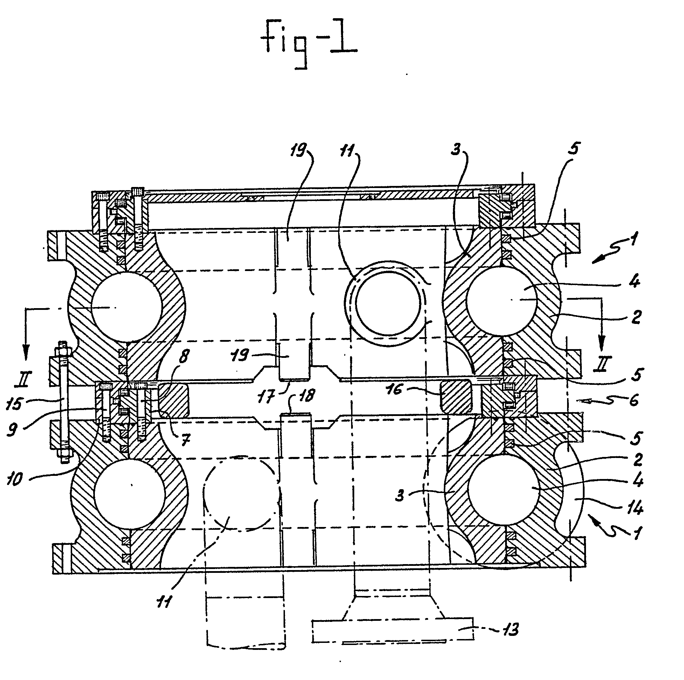

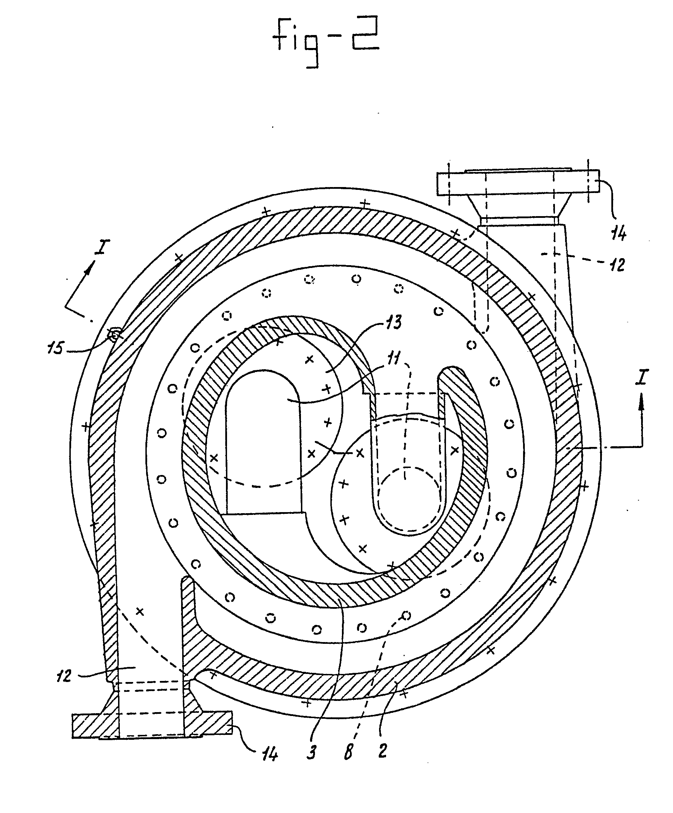

Fig. 1 shows a longitudinal section along the line I—I in Fig. 2.

Fig. 2 shows a horizontal section of one chamber along the line II—II in Fig. 1.

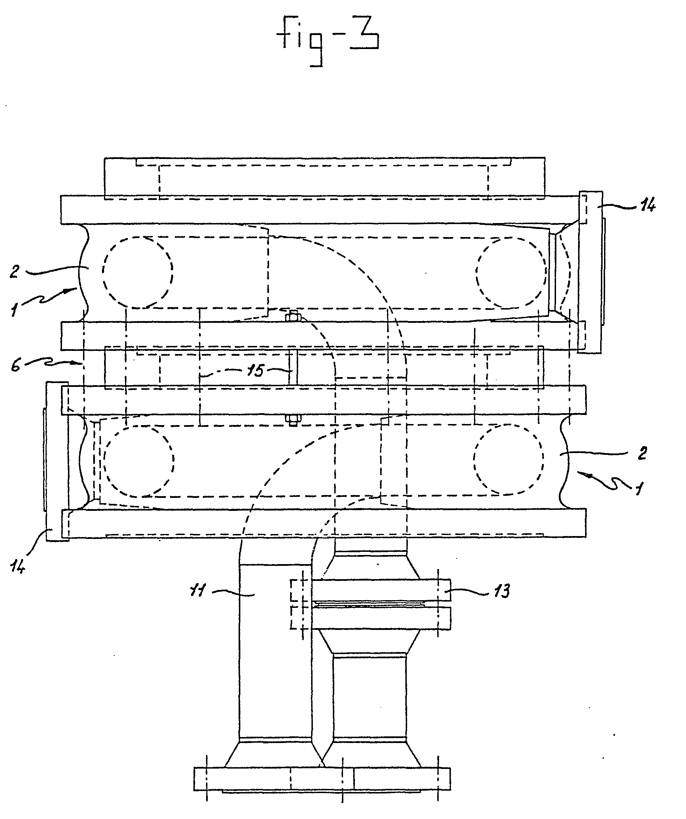

Fig. 3 represents a side elevation.

With reference to the drawings there has been shown a rotatable swivel including two chambers. Each chamber 1 consists of an outer wall portion 2 and an inner wall portion 3 constituting together an essentially annular channel 4. Between the outer wall portion 2 and the inner wall portion 3 there have been provided seals 5 which in the shown example have been located in grooves within the inner wall of the outer wall portion 2. To each chamber there has been fastened an axially-radially operative bearing 6 the inner ring 7 of which has been fastened to the inner wall portion 3 by means of bolts 8 and the outer ring 10 of which has been fastened to the outer wall portion 2 by means of bolts 9. There has been shown a roller bearing having axially operative rollers and radially operative rollers, for example of the Rote-Erde-type.

Each channel 4 possesses an inlet connection 11 and an outlet connection 12 each of which has been provided with a flange 13 and 14 respectively, for connecting to (not shown) conduits.

The outer wall portions 2 of the chambers placed on top of each other have been connected to each other by means of bolts 15. Between the inner wall portions 3 there has been accommodated an annular coupling means 16 at the level of the bearing which coupling means has been provided with recesses 17, 18 in which cams 19 of the inner wall portion 3 may be locked. The inner wall portions 3 are therefore coupled to each other in the circumferential direction. This coupling is a loose-fixed connection which will be released immediately when the chambers may be moved apart.

Although only two chambers have been shown in the drawing it will be evident that more than two chambers may be joined together in the indicated manner.

Likewise it is conceivable that each wall portion includes more than one channel to which several inlet and outlet conduits may be connected. In case of the latter type it is of course possible to join some of them which may be disassembled and reassembled as a unit.

From the embodiment shown in the drawing it will be clear that the disengagement of the conduit from a flange 14 may be effected without difficulties. Upon removal of the bolts 15 and the disengagement of the flange 13 the upper chamber 1 may be moved in upward direction and the lower chamber in a lateral direction.

The flange 13 may of course also be located at the level of the ring 16.

## Claims

1. A rotatable swivel for a plurality of conduits comprising a plurality of annular chambers (1) each of which formed by a stationary, radially inner wall portion (3) and a radially outer wall portion (2) rotatably mounted with respect thereto, said rotatable wall portion (2) being supported on said stationary wall portion (3) by radially and axially operative bearing means (6), said wall portions (2, 3) being sealed with respect to each other by means of annular sealing rings (5), each wall portion (2, 3) having one or more inlet connections (11) or outlet connections (12) to said plurality of conduits, said inner wall portions (3) surrounding a central aperture through which the conduits connected to the inner wall portions run, characterized in that the stationary inner wall portion (3) of all chambers are identical in form, cross-section and diameter, that the rotatable outer wall portions (2) of all chambers are identical in shape, cross-section and diameter, that the outer wall portions (2) and/or inner wall portions (3) are detachably interconnected and that a single axial-radial bearing (6) is placed between two adjacent chambers with the inner race-ring (7) being connected to at least one of the stationary inner wall portions and the outer race-ring (10) being connected to at least one of the rotatable outer wall portions of the adjacent chambers.

2. A rotatable swivel as claimed in claim 1, characterized in that the stationary inner wall portions (3) are coupled to each other in the circumferential direction by means of cams (19).

3. A rotatable swivel as claimed in claim 2, characterized in that at the level of each bearing (6) and inside said bearing a ring (16) is placed between two adjacent chambers (1), said ring having recesses (17, 18) for the cams (19).

## Revendications

1. Un raccord orientable pour une pluralité de conduits, comportant une pluralité de chambres annulaires (1) respectivement formées par une partie de paroi intérieure fixe (3) suivant la direction radiale et une partie de paroi extérieure (2) suivant la direction radiale montée de façon à pouvoir tourner par rapport à celle-ci, ladite partie de paroi tournante (2) étant supportée sur ladite partie de paroi fixe (3) par des moyens formant palier (6) agissant radialement et axialement, lesdites parties de paroi (2, 3) étant réunies de façon étanche l'une par rapport à l'autre au moyen de bagues d'étanchéité annulaires (5), chaque partie de paroi (2, 3)˙ comportant une ou plusieurs connexions d'entrée (11) ou connexions de sortie (12) vers ladite pluralité de conduits, lesdites parties de paroi intérieure (3) entourant une ouverture centrale par laquelle passent les conduits connectés aux parties de paroi intérieure, caractérisé en ce que les parties de paroi intérieure fixes (3) de toutes les chambres sont identiques en ce qui concerne la forme, la section transversale et le diamètre, que les parties de paroi extérieure tournantes (2) de toutes les chambres sont identiques en ce qui concerne la forme, la section transversale et le diamètre, que les parties de paroi extérieure (2) et/ou les parties de paroi intérieure (3) sont interconnectées de façon amovible, et qu'un seul palier axial-radial (6) est placé entre deux chambres adjacentes, la piste intérieure (7) étant couplée à au moins une des parties de paroi intérieure fixes et la piste extérieure (10) étant couplée à au moins une des parties de paroi extérieure tournantes des chambres adjacentes.

2. Un raccord orientable tel que revendiqué dans la revendication 1, caractérisé en ce que les parties de paroi intérieure fixes (3) sont couplées les une aux autres suivant la direction circonférentielle au moyen de cames (19).

3. Un raccord orientable tel que revendiqué dans la revendication 2, caractérisé en ce qu'au niveau de chaque palier (6) et à l'intérieur dudit palier, une bague (16) est placée entre deux chambres adjacentes (1), ladite bague comportant des évidements (17, 18) pour les cames (19).

## Patentansprüche

1. Drehverbindung für mehrere Leitungen mit mehreren Ringkammern (1), die jeweils durch eine ruhende, radiale Innenwand (3) und eine bezüglich dieser drehbar montierte radiale Außenwand (2) gebildet werden, die auf der ruhenden Wand (3) mittels einer Radial- und Axial-Lageranordnung gelagert wird, wobei die Wände (2, 3) durch Dichtungsringe (5) gegeneinander abgedichtet sind, jede Wand (2, 3) eine oder mehrere Einlaß- oder Auslaßanschlüsse (11, 12) für die Leitungen aufweist und die Innenwände (3) eine Mittelöffnung umgeben, durch die die an die Innenwände angeschlossenen Leitungen laufen, dadurch gekennzeichnet, daß die ruhenden Innenwände (3) aller Kammern gleiche Form, gleichen Querschnitt und gleichen Durchmesser haben, daß die drehbaren Außenwände (2) sämtlicher Kammern gleiche Form, gleichen Querschnitt und gleichen Durchmesser haben, daß die Außenwände (2) und/oder die Innenwände (3) lösbar miteinander verbunden sind, und daß zwischen benachbarten Kammern ein einzelnes Axial-Radial-Lager (6) angeordnet ist, wobei der innen laufende Ring (7) mit wenigstens einer der ruhenden Innenwände verbunden ist und der außen laufende Ring (10) mit wenigstens einer der drehbaren Außenwände der benachbarten Kammern verbunden ist.

2. Drehverbindung nach Anspruch 1, dadurch gekennzeichnet, daß die ruhenden Innenwände (3) in Umfangsrichtung durch Nocken (19) miteinander verbunden sind.

3. Drehverbindung nach Anspruch 2, dadurch gekennzeichnet, daß auf der Höhe jedes Lagers (6) und innerhalb dieses Lagers zwischen zwei benachbarten Kammern (1) ein Ring (16) angeordnet ist, welcher Ausnehmungen (17, 18) für die Nocken (19) aufweist.

# Fig-1

fig-2

0013455

fig-3